# EUROPÄISCHE PATENTANMELDUNG

(11) **EP 0 902 596 A2**
(43) Veröffentlichungstag der Anmeldung: **17.03.1999**
(21) Anmeldenummer: 98117157.2
(22) Anmeldetag: 10.09.1998
(51) Int. Cl.: H04Q 7/30

(54) **Vorrichtung zur Verarbeitung digitaler Signale für ein Endgerät eines Mobilfunknetzes**

(30) Priorität: 10.09.1997 DE 19739791
(71) Anmelder: SIEMENS AKTIENGESELLSCHAFT, 80333 München (DE)
(72) Erfinder: Ober, Uwe, 48565 Steinfurt (DE); Beckers, Michael, 46395 Bocholt (DE)

(57) **Zusammenfassung**

Eine Vorrichtung (AP) zur Verarbeitung digitaler Signale für ein Endgerät eines Telekommunikationsnetzes (CTN), insbesondere eines Mobilfunknetzes, welche die Dienste zumindest einer Schicht eines Protokollstapels des Netzes (CTN) ausführt und Digitalsignale für den Datenaustausch zwischen einer in der Vorrichtung (AP) ausgeführten, endseitigen Schicht (AL) und der dieser Schicht untergeordneten Schicht (TL) über eine Festschnittstelle (AIF) mit einem Endgerät (TP) des Netzes (CTN) austauscht. Ein Endgerät (TP) eines Telekommunikationsnetzes (CTN), insbesondere eines Mobilfunknetzes, welches die Dienste zumindest der untersten Schicht eines Protokollstapels des Netzes (CTN) ausführt. Über eine Festschnittstelle (TIF), mit der das Endgerät (TP) an eine SignalverarbeitungsVorrichtung (AP) angeschlossen ist, werden über eine Verbindung des Netzes (CTN) übertragene und/oder zu übertragende Informationen enthaltende Digitalsignale für den Datenaustausch zwischen einer im Endgerät (TP) ausgeführten Schicht (TL) und der dieser Schicht des Protokollstapels übergeordneten Schicht (AL) übermittelt.

## Beschreibung

Die vorliegende Erfindung betrifft ein Endgerät eines Telekommunikationsnetzes, welches dazu eingerichtet ist, die Dienste zumindest der untersten Schicht einer dem Netz Zugeordneten Datenaustausch-Architektur auszufuhren.

Weiters betrifft die vorliegende Erfindung eine Vorrichtung zur Verarbeitung digitaler Signale, die eine Festschnittstelle für die Übertragung digitaler Signale aufweist.

Für die Vernetzung von Computern sowie für die Anbindung von Computern an ein Telekommunikationsnetz bietet sich unter anderem die Technologie von Mobilfunknetzen an. Unter Mobilfunknetzen werden hier Telekommunikationsnetze verstanden, die sich für die Herstellung und Erhaltung von Verbindung der Mobilfunktechnologie bedienen. Hierzu gehören insbesondere schnurlose Telekommunikationsnetze, die lokale oder pikozelluläre Funknetze darstellen, in denen Mobilteile, die dem Benutzer als Telekommunikationsendgerät dienen, über Luftfunkstrecken mit einem Basisteil in Verbindung stehen, wobei gegebenenfalls das Basisteil mit einem öffentlichen Telekommunikationsnetz verbunden sein kann; zu unterscheiden sind Schnurlos-Netze von flächendeckenden Mobilfunknetzen wie das GSM-Netz. Ein Schnurlos-Mobilteil ist gewöhnlich tragbar, kann jedoch auch ortsfest sein. Für Mobilfunknetze und schnurlose Telekommunikation liegen einige Standards vor, von besonderer Bedeutung ist in jüngerer Zeit der DECT-Standard ('Digital Enhanced Cordless Telecommunication'), der in dem Artikel 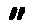 Struktur des DECT-Standards" von U. Pilger, Nachrichtentechnik Elektronik 42 (1992), eingehender beschrieben ist.

Ein schnurlos vernetzter Computer tritt über eine Luftfunkstrecke, anstelle mit Hilfe z.B. eines Kabels, mit einer Basisstation des Schnurlos-Netzes und über diese mit einem Teilnehmer, z.B. einem anderen Computer, bzw. einer Vermittlungsstelle eines Computer- oder Telekommunikationsnetzes in Verbindung, mit allen Vorteilen, die durch den Wegfall der Anschlußleitungen entstehen. Hierfür mußte der Computer bisher mit einer entsprechenden Mobilteil-Hardware, z.B. Einschubkarten für die Schnurlos-Endgerät-Funktionen, ausgerüstet werden; eine Kombination mit bereits bestehenden Mobilteilen eines Schnurlos-Netzes war nicht möglich. Dadurch war ein beträchtlicher Aufwand bei der Installation dieser Mobilteil-Hardware und der Anpassung der zugehörigen Software auf dem Computer nötig.

Es ist daher eine Aufgabe der Erfindung, ein Endgerät zur Verfügung zu stellen, das auf einfache Art und Weise an einen Computer - oder ein anderes zur Verarbeitung und Aufbereitung von digitalen Informationen geeignetes Gerät - über beispielsweise eine der üblichen Hardware-Schnittstellen angeschlossen werden kann und diesem die Funktionalität eines Endgerätes des betrachteten Telekommunikationsnetzes, insbesondere eines Mobilteiles eines Schnurlosnetzes, bietet. Unter den hier behandelten Telekommunikationsnetzen sind digitale Netze wie das ISDN-Netz besonders hervorzuheben, sowie, wie schon in der obigen Beschreibung angedeutet, Mobilfunknetze, wie etwa das GSM-Netz oder ein Schnurlostelefonnetz.

Diese Aufgabe wird ausgehend von einem Endgerät der eingangs beschriebenen Art mit Hilfe eines Endgerätes gelöst, bei welchem erfindungsgemäß eine Festschnittstelle, über welche auf einer Verbindung im Rahmen des Netzes übertragene und/oder zu übertragende Informationen enthaltende Digitalsignale für den Datenaustausch zwischen einer im Endgerät ausgeführten Schicht und der dieser Schicht der Datenaustausch-Architektur übergeordneten Schicht übermittelbar sind und mittels welcher das Endgerät an eine Signalverarbeitungs-Vorrichtung anschließbar ist, die für das Senden bzw. Empfangen und Verarbeiten der Digitalsignale eingerichtet ist.

Aufgrund dieser Lösung besteht nunmehr die Möglichkeit, ein bereits bestehendes Gerät zur digitalen Datenverarbeitung bzw. Verarbeitung digitaler Signale durch einfaches Anstecken eines erfindungsgemäßen Endgerätes zu einem Mobilteil aufzurüsten, das nun über Luftfunkstrecken an den Diensten des Telekommunikationsnetzes teilhaben kann, ohne daß weitere hardwaremäßige Installationsarbeiten nötig sind. Auf der Seite des Endgerätes kann der Aufwand der Hardware deutlich gegenüber den für ein Mobilteil notwendigen durch Einsparung z.B. der höheren, anwendungsorientierten Schichten oder der Akkumulator-Stromversorgung des Mobilteils, verringert werden.

Eine vorteilhafte Ausführungsform weist einen Ausgangssilospeicher auf, dessen Ausgang mit der Festschnittstelle verbunden ist und der für das Zwischenspeichern und Übermitteln von über die Festschnittstelle zu sendenden Digitalsignalen eingerichtet ist. Durch diesen Silo- oder FIFO-Speicher wird eine höhere Betriebssicherheit bei der Übertragung der gesendeten digitalen Signale erreicht.

Eine gleichermaßen für die Betriebssicherheit hinsichtlich der einlangenden Signale vorteilhafte Ausführungsform weist einen Eingangssilospeicher auf, dessen Eingang mit der Festschnittstelle verbunden ist und der für das Empfangen und Zwischenspeichern von über die Festschnittstelle einlangenden Digitalsignalen eingerichtet ist.

Es ist weiters in der Praxis besonders günstig, wenn das Endgerät für die Ausführung der Dienste der Schicht, die der Transportschicht untergeordnet ist, eingerichtet ist und Digitalsignale für den Datenaustausch zwischen dieser Schicht und der Transportschicht übermittelbar sind.

Bei einer besonders vorteilhaften Variante ist das Telekommunikationsnetz ein Mobilfunknetz, z.B. das GSM-Netz oder ein Schnurlostelefonnetz. Dies erbringt durch den Wegfall von Festleitungen u. dgl. eine höhere Flexibilität der Einrichtung und verringert den Installationsaufwand.

Hierbei ist weiterhin günstigerweise das Telekommunikationsnetz ein DECT-Netz und die unterste Schicht der Datenaustausch-Architektur die Physikalische Schicht im Sinne der DECT-Spezifikation. Dadurch können die Vorzüge der DECT-Technologie auch für die Erfindung nutzbar gemacht werden.

Es ist hierbei hinsichtlich des verringerten technischen Aufwandes bei der Realisierung eines DECT-Endgerätes günstig, wenn es für die Ausführung der Dienste der zwischen der MAC-Schicht im Sinne der DECT-Spezifikation eingerichtet ist und Digitalsignale für den Datenaustausch zwischen der MAC-Schicht und der DLC-Schicht übermittelbar sind.

Es ist ebenso bei der Realisierung eines DECT-Endgerätes günstig, wenn es für die Ausführung der Dienste der zwischen der NWK-Schicht im Sinne der DECT-Spezifikation und Anwendungsdiensten, wie z.B. solchen des ISDN, vermittelnden Anpassungsschicht eingerichtet ist und Digitalsignale für den Datenaustausch zwischen der Anpassungsschicht und den Anwendungsdiensten übermittelbar sind.

Eine hinsichtlich ihrer Flexibilität günstige Variante zeichnet sich dadurch aus, daß die Festschnittstelle eine serielle Schnittstelle ist.

Die oben dargestellte Aufgabe wird weiters ausgehend von einer Vorrichtung der eingangs genannten Art mit Hilfe einer Vorrichtung gelöst, welche erfindungsgemäß dazu eingerichtet ist, die Dienste zumindest einer Schicht einer einem Telekommunikationsnetz zugeordneten Datenaustausch-Architektur auszufuhren, wobei diese Schicht hoher als die unterste Schicht der Datenaustausch-Architektur ist, und Digitalsignale für den Datenaustausch zwischen einer in der Vorrichtung ausgeführten, endseitigen Schicht und der dieser Schicht untergeordneten Schicht über die Festschnittstelle als endseitige Schnittstelle mit einer für das Senden bzw. Empfangen und Verarbeiten der Digitalsignale eingerichteten endseitigen Signalverarbeitungs-Vorrichtung auszutauschen.

Diese Lösung erbringt neben den weiter oben dargestellten auch den Vorteil, daß die Verarbeitung der Informationen in den übergeordneten Schichten in der Signalverarbeitungs-Vorrichtung bzw. dem Computer, über mehrere Datenaustausch-Schichten übergreifend, flexibler gehandhabt werden kann, vor allem wenn diese in Hinsicht auf bestimmte Dienste und/oder Anwendungen erfolgt, wie beispielsweise bei der Übertragung eines Facsimile, die eine andere Codierung erfordert als etwa Sprachübertragung.

Eine besonders vorteilhafte Ausführungsform der Vorrichtung weist einen Ausgangssilospeicher auf, dessen Ausgang mit der endseitigen Festschnittstelle verbunden ist und der für das Zwischenspeichern und Übermitteln von über die endseitige Festschnittstelle zu sendenden Digitalsignalen eingerichtet ist. Auch hier wird durch den Silospeicher eine höhere Betriebssicherheit bei der Übertragung der gesendeten digitalen Signale erreicht.

Eine hinsichtlich der einlangenden Signale ebenso vorteilhafte Ausführungsform weist einen Eingangssilospeicher auf, dessen Eingang mit der endseitigen Festschnittstelle verbunden ist und der für das Empfangen und Zwischenspeichern von über die endseitige Festschnittstelle einlangenden Digitalsignalen eingerichtet ist.

Es ist weiters günstig, beispielsweise für die Verknüpfung mehrerer Geräte in einer komplexen Mobilteil-Anlage, wenn die Vorrichtung dazu eingerichtet ist, endseitige Digitalsignale zu anwendungsseitigen Digitalsignalen sowie anwendungsseitige Digitalsignale zu endseitigen Digitalsignalen entsprechend den Diensten zumindest der endseitigen Schicht zu verarbeiten, wobei die anwendungsseitigen Digitalsignale dem Datenaustausch zwischen einer in der Vorrichtung ausgeführten anwendungsseitigen Schicht, die höher als die endseitige Schicht oder dieser gleich ist, und der der anwendungsseitigen Schicht übergeordneten Schicht zugeordnet sind, sowie die anwendungsseitigen Digitalsignale über eine anwendungsseitige Festschnittstelle mit einer anwendungsseitigen Signalverarbeitungs-Vorrichtung auszutauschen, die für das Senden bzw. Empfangen und Verarbeiten der anwendungsseitigen Digitalsignale eingerichtet ist.

Wiederum für die Übertragungssicherheit der gesendeten Signale vorteilhaft ist eine Vorrichtung mit einem anwendungsseitigen Ausgangssilospeicher, dessen Ausgang mit der anwendungsseitigen Festschnittstelle verbunden ist und der für das Zwischenspeichern und Übermitteln von über die anwendungsseitigen Festschnittstelle zu sendenden Digitalsignalen eingerichtet ist.

Ebenso vorteilhaft hinsichtlich der einlangende Signale ist eine Vorrichtung mit einem anwendungsseitigen Eingangssilospeicher, dessen Eingang mit der anwendungsseitigen Festschnittstelle verbunden ist und der für das Empfangen und Zwischenspeichern von über die anwendungsseitige Festschnittstelle einlangenden Digitalsignalen eingerichtet ist.

Bei einer besonders vorteilhaften Ausführungsform der Vorrichtung ist das Telekommunikationsnetz ein Mobilfunknetz, z.B. das GSM-Netz oder ein Schnurlostelefonnetz. Dies erbringt seitens des Benutzers höhere Flexibilität und verringert den Installationsaufwand.

Hierbei ist das Telekommunikationsnetz günstigerweise ein DECT-Netz und die unterste Schicht der Datenaustausch-Architektur die Physikalische Schicht im Sinne der DECT-Spezifikation. Wiederum werden so die Vorzüge der DECT-Technologie auch für die Erfindung nutzbar gemacht.

Es ist hierbei hinsichtlich des verringerten technischen Aufwandes günstig, wenn die Vorrichtung für die Ausführung der Dienste der DLC-Schicht im Sinne der DECT-Spezifikation eingerichtet ist und endseitige Datensignale für den Datenaustausch zwischen der MAC-Schicht und der DLC-Schicht übermittelbar sind.

Es ist weiters gleichermaßen günstig, wenn die Vorrichtung für die Ausführung der Dienste der zwischen der NWK-Schicht im Sinne der DECT-Spezifikation und Anwendungsdiensten, wie z.B. solchen des ISDN, vermittelnden Anpassungsschicht eingerichtet ist und anwendungsseitige Digitalsignale für den Datenaustausch zwischen der Anpassungsschicht und den Anwendungsdiensten übermittelbar sind.

Eine hinsichtlich ihrer Flexibilität günstige Variante zeichnet sich dadurch aus, daß die endseitige und/oder die anwendungsseitige Festschnittstelle eine serielle Schnittstelle ist.

Eine weitere besonders vorteilhafte und leicht zu realisierende Ausführungsform realisiert die Vorrichtung als eine Anlage zur digitalen Datenverarbeitung.

Die Erfindung wird im folgenden anhand von einigen Ausführungsbeispielen, die als DECT-Mobilteile betreibbare Computer betreffen, unter Zuhilfenahme der Figuren näher erläutert. Es zeigen
Fig. 1 den DECT-Protokollstapel als Beispiel einer Datenaustausch-Architektur;
Fig. 2a und 2b zwei beispielhafte Ausführungsformen der Erfindung, in denen die Geräte-Schnittstelle an verschiedenen Schichttrennstellen verläuft;
Fig. 3 den Signalfluß über die Schnittstelle zwischen den beteiligten Schichten; und
Fig. 4 eine weitere Ausführungsform eines Mobilteiles, in der zwei Geräte-Schnittstellen realisiert sind, die jeweils der Fig. 2a und 2b entsprechen.

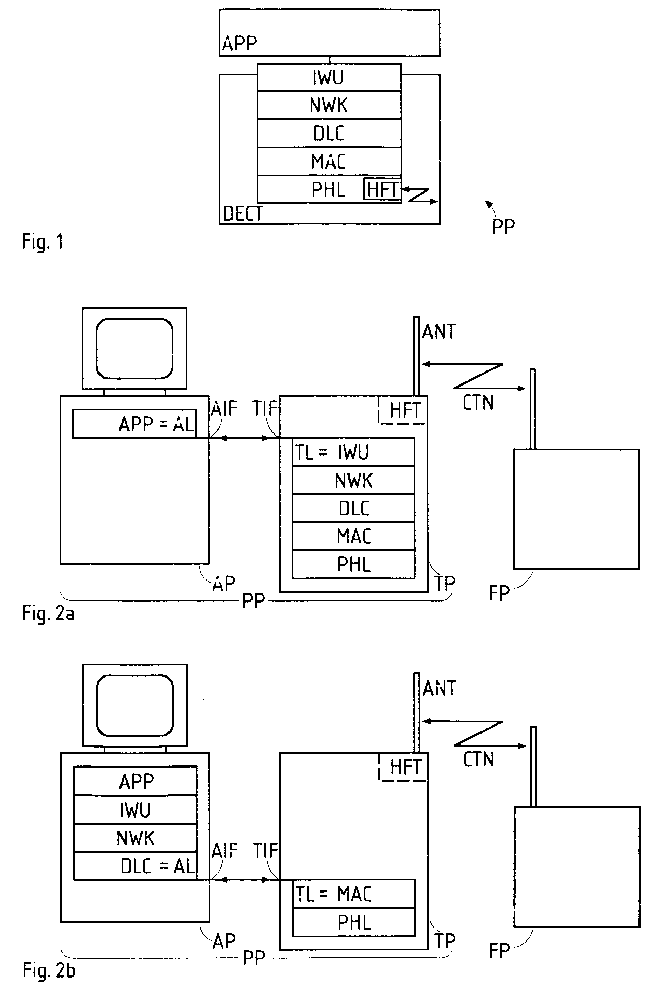

Figur 1 zeigt die Datenaustausch-Architektur eines Mobilteiles PP ('Portable Part') nach dem DECT-Standard, die für das bessere Verständnis der Erfindung hier kurz dargestellt wird. In dem DECT-Standard sind in Analogie zu dem OSI-Referenzmodell nach CCITT-Empfehlung X.200 Schichten der Signalverarbeitung in einer hierarchischen Architektur definiert. Diese sind, von der untersten, 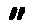 physikalischen" Seite aufsteigend zur anwendungsorientierten hin:
1) die PHL-Schicht ('Physical Layer'), die die zeitliche und frequenzbezogene Struktur der übertragenen Daten definiert - zur Realisierung der PHL-Schicht benötigt das Mobilteil PP unter anderem ein Hochfrequenzteil HFT und eine Antenne ANT zum Senden und Empfangen der Signale auf der Luftfunkstrecke;
2) die MAC-Schicht ('Medium Access Layer'), die der Übertragung und Fehlerkorrektur von Daten dient,
3) die DLC-Schicht ('Data Link Control'), die fehlerfreie Datenelemente bereitstellt, und
4) die NWK-Schicht ('Network'), die für den Auf- und Abbau sowie Erhalt von DECT-Verbindungen sorgt.

Dazu kommt bei Mobilteilen, die in ein Computerbetriebssystem oder ein digitales Netz wie das ISDN eingebunden sind, noch die Anpassungs- oder IWU-Schicht ('Inter-Working Unit'), die zwar nicht ausdrücklich, aber durch die ihr zukommenden Funktionen im DECT-Standard definiert ist und die zwischen den DECT-Schichten und den Anwendungsdiensten APP vermittelt. Die Anwendungsdienste APP können, soweit für die Erfindung von Belang, als die die Datenaustausch-Architektur nach oben hin abschließende Schicht betrachtet werden.

Die digitalen Signale, die zwischen den Schichten ausgetauscht werden, beinhalten Befehle und Meldungen hinsichtlich der auf dem Luftfunkweg übertragenen bzw. zu übertragenden Informationen. Für die Anwendungsdienste APP wirken die DECT-Schichten transparent, d.h. die Übertragung der Informationen geschieht, wie wenn sie direkt von einem Anwendungsdienst zu einem anderen erfolgt. Ebenso sind für jede der DECT-Schichten PHL, MAC, DLC, NWK, IWU die jeweils darunterliegenden Schichten transparent. Der Austausch von Daten findet nur zwischen benachbarten Schichten und in Form digitaler Signale nach definierten Protokollen statt; daher rührt die Bezeichnung Protokollstapel für die in Fig. 1 gezeigte Schichtarchitektur einschließlich der Anwendungsdienste als Anwendungsschicht APP. Bei anderen Datenaustausch-Architekturen können zwar die Schichten anders definiert sein, jedoch findet der Datenaustausch stets nur zwischen benachbarten Schichten statt, wobei zu übertragende Informationen in der Architektur von oben nach unten, von der 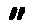 Anwendungsseite" zur 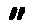 Endseite" des Übertragungsmediums, weitergereicht werden, während aus dem Übertragungsmedium empfangene Daten bei der Umsetzung in anwendungsorientierte Daten in der entgegengesetzten Richtung 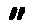 wandern".

Die Standards wie der DECT-Standard schreiben freilich nicht vor, daß die technische Realisierung eines Schnurlos-Gerätes die Schichten als wohlgetrennte Funktions- bzw. Baugruppen implementiert. Dies ist jedoch eine technisch bereits realisierte Möglichkeit, von der die Erfindung Gebrauch macht. So können etwa die Schichten von der DLC-Schicht an aufwärts als modulare Programme oder Programmgruppen softwaremäßig implementiert werden; die einzelnen Schichten, insbesondere die PHL-Schicht, können aber auch z.B. als Platinen ausgeführt sein, die miteinander über Buskabel od. dgl. kommunizieren.

Gemäß der Erfindung wird der Protokollstapel nun so ausgeführt, daß zwischen zwei benachbarten Schichten TL, AL eine Schnittstelle eingefügt wird. Dies ist in den Fig. 2a und 2b symbolisch dargestellt. Die 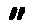 endseitigen", also niederen Schichten verbleiben im Endgerät TP ('Terminal Part'), während die 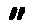 anwendungsseitigen", also höheren Schichten von einem anderen Gerät AP ('Application Part') zur Verarbeitung der digitalen Signale, im Beispiel ein mit der Datenaustausch-Schichten-Software ausgerüsteter PC, übernommen werden. Fig. 2a stellt die Möglichkeit dar, nur die Anwendungsschicht APP auf dem Computer AP zu betreiben, wahrend die gesamten DECT-Schichten im Endgerät TP verbleiben; Fig. 2b zeigt den Fall, daß der Computer AP auch die DLC- und NWK-Schichten sowie die Anpassungsschicht übernimmt. Funktionell bilden der Computer AP und das Endgerät TP gemeinsam ein Mobilteil PP, das im Rahmen des schnurlosen Telekommunikationsnetzes CTN, im Beispiel ein DECT-Netz, mit einer Basisstation FP ('Fixed Part') in Verbindung tritt.

Die Verbindung zwischen dem Computer AP einerseits und dem Endgerät TP andererseits erfolgt über eine Festschnittstelle, d.h. eine als z.B. Steckverbindung hardwaremäßig ausgeformte Schnittstelle. Seitens des Computers AP können beispielsweise die üblichen seriellen Computer-Schnittstellen, z.B. ein RS232-Anschluß, als Schnittstellenanschluß AIF nach der Erfindung verwendet werden, an die das Endgerät TP mit seinem passenden Schnittstellenanschluß TIF beispielsweise direkt oder über ein Kabel zwischen den Schnittstellenanschlüssen AIF, TIF angeschlossen werden kann. Über die Schnittstelle AIF, TIF findet nun der Austausch der Digitalsignale zwischen der untersten anwendungsseitigen Schicht AL im Computer AP und der obersten endseitigen Schicht TL im Endgerät TP statt. Die serielle Schnittstelle kann beispielsweise als V.24- oder I²C-Schnittstelle realisiert sein; anstelle einer seriellen Schnittstelle können auch z.B. eine parallele Schnittstelle oder in besonderen Fällen auch ein Dualport-Speicher ('dual-ported RAM') verwendet werden.

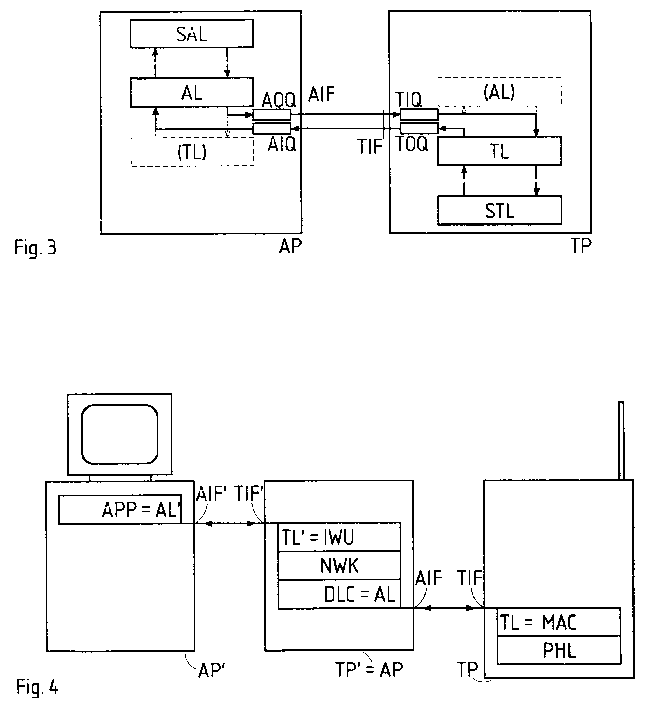

In Fig. 3 ist der Datenfluß zwischen der anwendungsseitigen Schicht AL und der endseitigen Schicht TL über die serielle Schnittstelle AIF, TIF dargestellt. Zu sendende Daten, die die anwendungsseitige Schicht AL ihrerseits von der ihr übergeordneten Schicht SAL erhalten hat, werden in der Schicht AL entsprechend ihren Aufgaben verarbeitet und an die ihr untergeordnete Schicht, also die endseitige Schicht TL gesendet. Aus der Sicht der anwendungsseitigen Schicht erfolgt dies transparent, wie wenn die endseitige Schicht in dem Computer AP implementiert (TL) wäre; tatsächlich werden die Digitalsignale über die Festschnittstelle AIF, TIF zu dem Endgerät AP geleitet. Um die Übertragung der Datensignale von dem Computer AP zu dem Endgerät TP reibungslos zu gewährleisten, sind sowohl der Ausgang der anwendungsseitigen Schnittstelle AIF als auch der Eingang der endseitigen Schnittstelle TIF mittels eines Ausgangs-Silospeichers AOQ bzw. Eingangs-Silospeichers TIQ gepuffert. Silospeicher sind auch als FIFO-Speicher ('First In - First Out'), Queues oder Warteschlangenspeicher bekannt; in einem Silospeicher gespeicherte Daten sind nur in der Reihenfolge ihres Einlangens abrufbar und werden nach dem Abrufen aus dem Silospeicher gelöscht. In dem Endgerät TP werden die Datensignale - wiederum wie wenn sie von einer im Endgerät betriebenen anwendungsseitigen Schicht (AL) stammten - von der endseitigen Schicht TL entgegengenommen, verarbeitet und an die ihr untergeordnete Schicht STL weitergereicht und schließlich über das Schnurlosnetz gesendet. Analog, jedoch in umgekehrter Reihenfolge erfolgt die Verarbeitung von aus dem Schnurlosnetz im Endgerät TP empfangenen Daten, wobei nun die Empfangsdaten über einen Ausgangs-Silospeicher TOQ bei der endseitigen Schnittstelle TIF sowie einen Eingangs-Silospeicher AIQ seitens der endgeräteseitigen Schnittstelle AIF gepuffert werden. Wenn es die Erfordernisse zulassen, können in besonderen Fallen auch einzelne Silospeicher, unter Umständen sogar alle Silospeicher AOQ, TIQ, TOQ, AIQ entfallen.

Prinzipiell kann die Trennstelle AL-TL in der Schichtenarchitektur zwischen zwei beliebigen benachbarten Schichten der Datenaustausch-Architektur eingefügt werden. Unter Umständen kann hierfür eine Schicht in zwei Schichten aufgespaltet werden, man vergleiche die Entsprechung zwischen der 2. OSI-Schicht einerseits und den MAC- und DLC-Schichten des DECT andererseits. Die Festlegung der Trennstelle kann auf verschiedene Weise erfolgen. Zum einen kann der Fall eines Endgerätes TP mit einem fest vorgegebenen Satz von Schichten vorliegen, z.B. ein Endgerät nach Art der Fig. 2b, in dem die PHL- und MAC-Schichten implementiert sind und über dessen Schnittstelle TIF Digitalsignale zwischen der im Endgerät TP eingerichteten MAC-Schicht TL und einer dem Endgerät externen DLC-Schicht AL gesendet werden. Ein solches Endgerät ist für sich nicht funktionsfähig, sondern erst, wenn es an eine Signalverarbeitungsanlage AP angeschlossen wird, die die übermittelten Digitalsignale verarbeiten und entsprechende Digitalsignale an das Endgerät übermitteln kann - gewöhnlicherweise indem die entsprechende anwendungsseitige Schicht AL, hier die DLC-Schicht, auf der Anlage AP betrieben oder zumindest simuliert wird. Beispielsweise ist eine solche Anlage AP ein Computer, welcher, nachdem das Endgerät TP angeschlossen und von dem Benutzer ein Befehl beispielsweise für einen Verbindungsaufbau über das Schnurlosnetz CTN gegeben wurde, die Art der vom Endgerät TP übertragenen Digitalsignale überprüft und dann die zu ergänzenden Schichten aufruft, also im genannten Beispiel den gesamten Protokollstapel von der DLC-Schicht bis zur Anwendungsschicht.

Falls der Computer neben den Anwendungsdiensten APP nicht sämtliche dem Endgerät TP fehlenden Schichten bereitstellen kann, kann auch ein Zwischengerät TP' nach Fig. 4 verwendet werden, das die fehlenden Schichten liefert. Für das Endgerät TP der Fig. 2b übernimmt dieses Zwischengerät nun die Funktion der Signalverarbeitungsanlage AP, wahrend es für den Computer AP', der dem Computer AP der Fig. 2a entspricht, als Endgerät TP' dient. Diese und ähnliche Konfigurationen sind lediglich in besonderen Fällen, wie etwa dem gerade genannten oder bei miteinander nicht direkt verträglichen Geräten, von Vorteil. Allerdings ist die Anzahl der so in Kette geschalteten Geräte im Prinzip nur durch die Anzahl der Schichten der zugrundegelegten Datenaustausch-Architektur begrenzt.

Eine andere Möglichkeit besteht darin, daß das Endgerät TP ein voll funktionsfähiges Mobilteil ist. Zusätzlich ist es mit einer Schnittstelle TIF ausgerüstet, sowie mit einem Schalter, der dazu dient, in dem Mobilteil die höheren Schichten, z.B. wieder in bezug auf Fig. 2b die DLC-Schicht und die darüberliegenden, anzuhalten, und wie oben beschrieben den Datenaustausch von bzw. zu der MAC-Schicht über die Schnittstelle TIF umzuleiten. Über den Schalter, beispielsweise als Mehrwegschalter, können auch mehrere mögliche Trennstellen vom Benutzer ausgewählt werden, z.B. zwischen IWU-NWK und DLC-MAC wie in Fig. 2a bzw. 2b.

Eine weitere Variante hierzu kommt ohne Schalter dadurch aus, daß bei Einlangen von Datensignalen von dem Computer AP aus in dem Endgerät TP die Datensignale auf ihre Art hin überprüft werden und dann die entsprechende anwendungsseitige Schicht (AL) im Endgerät für die Dauer der Verbindung mit dem Computer AP angehalten wird.

Schließlich kann anstelle eines Computers auch ein anderes zur Signalverarbeitung eingerichtetes Anwendungsteil AP verwendet werden. Dies kann z.B. ein äußerlich einem Mobilteil gleichendes Gerät sein und auch die gleichen Funktionen und Betriebsmerkmale anbieten; jedoch ist die PHL-Schicht mit der ihr zukommenden Hardware, z.B. dem Hochfrequenzteil HFT und der Antenne ANT, sowie möglicherweise weitere endseitige Schichten nicht realisiert oder zeitweilig abschaltbar, so daß dieses Anwendungsteil AP für sich genommen unvollständig ist und durch eines der weiter oben beschriebenen Endgeräte TP oder eine entsprechende Vorrichtung ergänzt werden muß.

Selbstverständlich beschreiben die oben dargestellten Ausführungsbeispiele nicht die einzigen Anwendungsmöglichkeiten der Erfindung. Im besonderen ist die Erfindung nicht auf DECT-Systeme eingeschränkt, noch auf die Datenaustausch-Architektur des DECT. Vielmehr umfaßt die Erfindung jede von einem Fachmann realisierbare Ausführungsform, die durch die unabhängigen Ansprüche 1 und 10 beschrieben sind.

## Patentansprüche

1. Endgerät (TP) eines Telekommunikationsnetzes (CTN), welches dazu eingerichtet ist, die Dienste zumindest der untersten Schicht einer dem Netz (CTN) zugeordneten Datenaustausch-Architektur auszuführen, **gekennzeichnet durch**
eine Festschnittstelle (TIF), über welche auf einer Verbindung im Rahmen des Netzes (CTN) übertragene und/oder zu übertragende Informationen enthaltende Digitalsignale für den Datenaustausch zwischen einer im Endgerät (TP) ausgeführten Schicht (TL) und der dieser Schicht der Datenaustausch-Architektur übergeordneten Schicht (AL) übermittelbar sind und mittels welcher das Endgerät (TP) an eine Signalverarbeitungs-Vorrichtung (AP) anschließbar ist, die für das Senden bzw. Empfangen und Verarbeiten der Digitalsignale eingerichtet ist.

2. Endgerät nach Anspruch 1, **gekennzeichnet durch**
einen Ausgangssilospeicher (TOQ), dessen Ausgang mit der Festschnittstelle (TIF) verbunden ist und der für das Zwischenspeichern und Übermitteln von über die Festschnittstelle (TIF) zu sendenden Digitalsignalen eingerichtet ist.

3. Endgerät nach Anspruch 1 oder 2, **gekennzeichnet durch**
einen Eingangssilospeicher (TIQ), dessen Eingang mit der Festschnittstelle (TIF) verbunden ist und der für das Empfangen und Zwischenspeichern von über die Festschnittstelle (TIF) einlangenden Digitalsignalen eingerichtet ist.

4. Endgerät nach einem der Ansprüche 1 bis 3, **dadurch gekennzeichnet, daß**
es für die Ausführung der Dienste der Schicht, die der Transportschicht untergeordnet ist, eingerichtet ist und Digitalsignale für den Datenaustausch zwischen dieser Schicht und der Transportschicht übermittelbar sind.

5. Endgerät nach einem der Ansprüche 1 bis 3**, dadurch gekennzeichnet, daß**
das Telekommunikationsnetz (CTN) ein Mobilfunknetz, z.B. das GSM-Netz oder ein Schnurlostelefonnetz, ist.

6. Endgerät nach einem der Ansprüche 1 bis 5, **dadurch gekennzeichnet, daß**
das Telekommunikationsnetz (CTN) ein DECT-Netz ist und die unterste Schicht der Datenaustausch-Architektur die Physikalische Schicht im Sinne der DECT-Spezifikation ist.

7. Endgerät nach Anspruch 6, **dadurch gekennzeichnet, daß**
es für die Ausführung der Dienste der zwischen der MAC-Schicht im Sinne der DECT-Spezifikation eingerichtet ist und Digitalsignale für den Datenaustausch zwischen der MAC-Schicht und der DLC-Schicht übermittelbar sind.

8. Endgerät nach Anspruch 6, **dadurch gekennzeichnet, daß**
es für die Ausführung der Dienste der zwischen der NWK-Schicht im Sinne der DECT-Spezifikation und Anwendungsdiensten, wie z.B. solchen des ISDN, vermittelnden Anpassungsschicht (IWU) eingerichtet ist und Digitalsignale für den Datenaustausch zwischen der Anpassungsschicht und den Anwendungsdiensten übermittelbar sind.

9. Endgerät nach einem der Ansprüche 1 bis 8, **dadurch gekennzeichnet, daß**
die Festschnittstelle (TIF) eine serielle Schnittstelle ist.

10. Vorrichtung (AP) zur Verarbeitung digitaler Signale, die eine Festschnittstelle (AIF) für die Übertragung digitaler Signale aufweist, **dadurch gekennzeichnet, daß**
sie dazu eingerichtet ist, die Dienste zumindest einer Schicht einer einem Telekommunikationsnetz (CTN) zugeordneten Datenaustausch-Architektur auszuführen, wobei diese Schicht hoher als die unterste Schicht der Datenaustausch-Architektur ist, und Digitalsignale für den Datenaustausch zwischen einer in der Vorrichtung (AP) ausgeführten, endseitigen Schicht (AL) und der dieser Schicht untergeordneten Schicht (TL) über die Festschnittstelle (AIF) als endseitige Schnittstelle mit einer für das Senden bzw. Empfangen und Verarbeiten der Digitalsignale eingerichteten endseitigen Signalverarbeitungs-Vorrichtung (TP) auszutauschen.

11. Vorrichtung nach Anspruch 10, **gekennzeichnet durch**
einen Ausgangssilospeicher (AOQ), dessen Ausgang mit der endseitigen Festschnittstelle (AIF) verbunden ist und der für das Zwischenspeichern und Übermitteln von über die endseitige Festschnittstelle (AIF) zu sendenden Digitalsignalen eingerichtet ist.

12. Vorrichtung nach Anspruch 10 oder 11, **gekennzeichnet durch**
einen Eingangssilospeicher (AIQ), dessen Eingang mit der endseitigen Festschnittstelle (AIF) verbunden ist und der für das Empfangen und Zwischenspeichern von über die endseitige Festschnittstelle (AIF) einlangenden Digitalsignalen eingerichtet ist.

13. Vorrichtung nach einem der Ansprüche 9 bis 12, **dadurch gekennzeichnet, daß**
sie dazu eingerichtet ist, endseitige Digitalsignale zu anwendungsseitigen Digitalsignalen sowie anwendungsseitige Digitalsignale zu endseitigen Digitalsignalen entsprechend den Diensten zumindest der endseitigen Schicht zu verarbeiten, wobei die anwendungsseitigen Digitalsignale dem Datenaustausch zwischen einer in der Vorrichtung (AP) ausgeführten anwendungsseitigen Schicht (TL'), die höher als die endseitige Schicht (AL) oder dieser gleich ist, und der der anwendungsseitigen Schicht übergeordneten Schicht (AL') zugeordnet sind, sowie die anwendungsseitigen Digitalsignale über eine anwendungsseitige Festschnittstelle (TIF') mit einer anwendungsseitigen Signalverarbeitungs-Vorrichtung (AP') auszutauschen, die für das Senden bzw. Empfangen und Verarbeiten der anwendungsseitigen Digitalsignale eingerichtet ist.

14. Vorrichtung nach Anspruch 13, **gekennzeichnet durch**
einen anwendungsseitigen Ausgangssilospeicher (TOQ'), dessen Ausgang mit der anwendungsseitigen Festschnittscelle (TIF') verbunden ist und der für das Zwischenspeichern und Übermitteln von über die anwendungsseitigen Festschnittstelle (TIF') zu sendenden Digitalsignalen eingerichtet ist.

15. Vorrichtung nach Anspruch 13 oder 14, **gekennzeichnet durch**
einen anwendungsseitigen Eingangssilospeicher (TIQ'), dessen Eingang mit der anwendungsseitigen Festschnittstelle (TIF') verbunden ist und der für das Empfangen und Zwischenspeichern von über die anwendungsseitige Festschnittstelle (TIF') einlangenden Digitalsignalen eingerichtet ist.

16. Vorrichtung nach einem der Ansprüche 10 bis 15, **dadurch gekennzeichnet, daß**
das Telekommunikationsnetz (CTN) ein Mobilfunknetz, z.B. das GSM-Netz oder ein Schnurlostelefonnetz, ist.

17. Vorrichtung nach einem der Ansprüche 10 bis 16, **dadurch gekennzeichnet, daß**
das Telekommunikationsnetz (CTN) ein DECT-Netz ist.

18. Vorrichtung nach Anspruch 17, **dadurch gekennzeichnet, daß**
sie für die Ausführung der Dienste der DLC-Schicht im Sinne der DECT-Spezifikation eingerichtet ist und endseitige Datensignale für den Datenaustausch zwischen der MAC-Schicht und der DLC-Schicht übermittelbar sind.

19. Vorrichtung nach Anspruch 13 und Anspruch 17 oder 18, **dadurch gekennzeichnet, daß**
sie für die Ausführung der Dienste der zwischen der NWK-Schicht im Sinne der DECT-Spezifikation und Anwendungsdiensten, wie z.B. solchen des ISDN, vermittelnden Anpassungsschicht (IWU) eingerichtet ist und anwendungsseitige Digitalsignale für den Datenaustausch zwischen der Anpassungsschicht (IWU) und den Anwendungsdiensten übermittelbar sind.

20. Vorrichtung nach einem der Ansprüche 10 bis 19, **dadurch gekennzeichnet, daß**
die endseitige und/oder die anwendungsseitige Festschnittstelle (AIF, TIF') eine serielle Schnittstelle ist.

21. Vorrichtung nach einem der Ansprüche 10 bis 20, **dadurch gekennzeichnet, daß**
sie eine Anlage zur digitalen Datenverarbeitung ist.
